# EUROPEAN PATENT SPECIFICATION

(11) **EP 3 664 505 B1**
(45) Date of publication and mention of the grant of the patent: **21.10.2026**
(21) Application number: 17921048.9
(22) Date of filing: 11.08.2017
(51) Int. Cl.: H04W 4/40, H04W 4/80, H04W 72/20, H04L 5/00, H04B 7/06, H04W 4/02, H04W 72/044, H04B 7/185, H04W 4/00

(54) **COMMUNICATION METHOD AND RELATED DEVICE**
KOMMUNIKATIONSVERFAHREN UND ZUGEHÖRIGE VORRICHTUNG
PROCÉDÉ DE COMMUNICATION ET DISPOSITIF ASSOCIÉ

(43) Date of publication of application: 10.06.2020
(73) Proprietor: Huawei Technologies Co., Ltd., Longgang District Shenzhen, Guangdong 518129 (CN)
(72) Inventor: CHAI, Li, Shenzhen Guangdong 518129 (CN); TANG, Xun, Shenzhen Guangdong 518129 (CN); ZHANG, Jian, Shenzhen Guangdong 518129 (CN); QUAN, Wei, Shenzhen Guangdong 518129 (CN); MIAO, Jinhua, Shenzhen Guangdong 518129 (CN)
(74) Representative: Maiwald GmbH
(86) International application number: PCT/CN2017/097286
(87) International publication number: WO 2019/028925

(56) References cited:
- WO-A1-2017/092707
- CN-A- 101 527 958
- CN-A- 103 249 087
- CN-A- 105 979 603
- CN-A- 105 979 603
- CN-A- 106 851 744
- US-A1- 2016 249 327
- US-A1- 2017 208 607
- US-A1- 2018 279 281

## Description

### TECHNICAL FIELD

The present invention relates to the field of communications technologies, and in particular, to a communication method and a related device.

### BACKGROUND

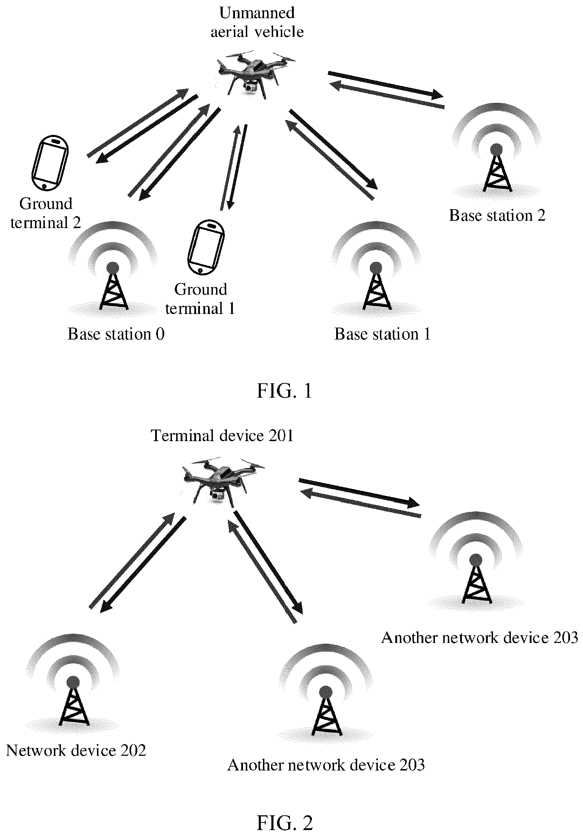

A cellular communications system is mainly specific to a ground terminal at the beginning of design. If the cellular communications system can support an unmanned aerial vehicle and help the unmanned aerial vehicle to perform long-distance flight, the unmanned aerial vehicle can fully perform functions such as picture collection, video photographing, and transportation, thereby bringing greater convenience to people's lives. When a flight height of the unmanned aerial vehicle exceeds a height of a base station, there is no obstruction between the unmanned aerial vehicle and a plurality of devices (including the base station and the ground terminal). Therefore, signals sent by the plurality of devices are easily received by the unmanned aerial vehicle, and a signal sent by the unmanned aerial vehicle is also easily received by the plurality of devices. As shown in FIG. 1, when an unmanned aerial vehicle in high altitude communicates with a base station 0 that provides a service, because there is no obstruction between the unmanned aerial vehicle and a base station 1, a base station 2, a ground terminal 1, and a ground terminal 2, a signal sent by the unmanned aerial vehicle may be received by the base station 1, the base station 2, the ground terminal 1, and the ground terminal 2, and signals sent by the base station 1, the base station 2, the ground terminal 1, and the ground terminal 2 may also be received by the unmanned aerial vehicle.
WO 2017/092707 A1 describes methods and an apparatuses for a wireless communications method is applied to a communications system using a frequency domain resource with a specified bandwidth, where the frequency domain resource is divided into at least two frequency domain resource groups, each frequency domain resource group includes at least one resource block.
US 2016/249327 A1 describes systems and methods for wireless communications, and more specifically to managing narrowband regions of system bandwidths for devices with limited communications resources, such as machine type communication(s) (MTC) devices and enhanced MTC (eMTC) devices.
CN 105 979 603 A describes an unmanned aerial vehicle uplink scheduling method for information flow QoS guarantee based on a TD-LTE technology
US 2017/208607 A1 describes wireless network scheduling method, an access device, and a wireless network

How to configure a communication resource for the unmanned aerial vehicle in the cellular communications system to reduce communication interference between the unmanned aerial vehicle and a device in the communications system is a technical problem that is being studied by a person skilled in the art.

### SUMMARY

The present invention is defined in the independent claims. The dependent claims define the advantageous embodiments thereof.

Embodiments of the present invention disclose a communication method and a related device, so that downlink and uplink interference can be reduced, and a switching frequency of a terminal device can be reduced.

According to a first aspect, an embodiment of the present invention provides a communication method. The method includes: first, determining, by a network device, a first resource set, where resources in the first resource set include some resources in one cell or resources in a plurality of cells, the resources included in the first resource set are periodic, at a same transmission moment, the first resource set serves only one terminal device or one terminal device group, the terminal device group includes a plurality of terminal devices, and at different transmission moments, resources used for co-directional transmission in the first resource set occupy a same frequency domain position on a same carrier; and then, sending, by the network device, resource configuration information to the terminal device by using higher layer signaling, where the resource configuration information is used to indicate the first resource set. The embodiment further comprises: before before the sending, by the network device, resource configuration information to the terminal device by using higher layer signaling, the method further comprises: determining, by the network device, based on the report message, that a height of the terminal device meets a preset condition or determining that the terminal device is in a preset flight status.

By performing the steps, the network device determines the first resource set and configures the first resource set for the terminal device for use. Because at a same transmission moment, the resources in the first resource set are used only by the terminal device or the terminal device group, when the terminal device configured with the first resource set performs communication by using the resource in the first resource set, downlink and uplink interference are reduced, and a switching frequency is reduced.

With reference to the first aspect, in a first possible implementation of the first aspect, when the first resource set serves only one terminal device group, the method further includes: sending, by the network device, scheduling information to a first terminal device in the terminal device group by using physical layer signaling, where the scheduling information is used to indicate a first resource in the first resource set, and the first resource is used by the first terminal device to perform communication.

According to a second aspect, an embodiment of the present invention provides a communication method. The method includes: first, receiving, by a terminal device, resource configuration information from a network device by using higher layer signaling, where the resource configuration information is used to indicate a first resource set, resources in the first resource set include some resources in one cell or resources in a plurality of cells, the resources included in the first resource set are periodic, at a same transmission moment, the first resource set serves only the terminal device or one terminal device group, the terminal device group includes a plurality of terminal devices including the terminal device, and at different transmission moments, resources used for co-directional transmission in the first resource set occupy a same frequency domain position on a same carrier; and then, determining, by the terminal device, the first resource set based on the resource configuration information.

By performing the steps, the network device determines the first resource set and configures the first resource set for the terminal device for use. Because at a same transmission moment, the resources in the first resource set are used only by the terminal device or the terminal device group, when the terminal device configured with the first resource set performs communication by using the resource in the first resource set, downlink and uplink interference are reduced, and a switching frequency is reduced.

With reference to the second aspect, in a first possible implementation of the second aspect, the method further includes: receiving, by the terminal device, scheduling information from the network device by using physical layer signaling, where the scheduling information is used to indicate a first resource in the first resource set, and the first resource is used by the terminal device to perform communication.

According to a third aspect, an embodiment of the present invention provides a device, and the device includes a processing unit and a communications unit. The processing unit determines a first resource set, where resources in the first resource set include some resources in one cell or resources in a plurality of cells, and the resources included in the first resource set are periodic. At a same transmission moment, the first resource set serves only one terminal device or one terminal device group, and the terminal device group includes a plurality of terminal devices. At different transmission moments, resources used for co-directional transmission in the first resource set occupy a same frequency domain position on a same carrier. The communications unit sends resource configuration information to the terminal device by using higher layer signaling, where the resource configuration information is used to indicate the first resource set. The embodiment further comprises: before the communications unit sends the resource configuration information to the terminal device by using the higher layer signaling, the processing unit is further configured to determine that a height of the terminal device meets a preset condition or determine that the terminal device is in a preset flight state.

By performing the operations, the network device determines the first resource set and configures the first resource set for the terminal device for use. Because at a same transmission moment, the resources in the first resource set are used only by the terminal device or the terminal device group, when the terminal device configured with the first resource set performs communication by using the resource in the first resource set, downlink and uplink interference are reduced, and a switching frequency is reduced.

With reference to the third aspect, in a first possible implementation of the third aspect, the communications unit is further configured to send scheduling information to a first terminal device in the terminal device group by using physical layer signaling, where the scheduling information is used to indicate a first resource in the first resource set, and the first resource is used by the first terminal device to perform communication.

According to a fourth aspect, an embodiment of the present invention provides a device, and the device includes a processing unit and a communications unit. The communications unit receives resource configuration information from a network device by using higher layer signaling, where the resource configuration information is used to indicate a first resource set, resources in the first resource set include some resources in one cell or resources in a plurality of cells, and the resources included in the first resource set are periodic. At a same transmission moment, the first resource set serves only the terminal device or one terminal device group, and the terminal device group includes a plurality of terminal devices including the terminal device. At different transmission moments, resources used for co-directional transmission in the first resource set occupy a same frequency domain position on a same carrier. The processing unit determines the first resource set based on the resource configuration information.

By performing the operations, the network device determines the first resource set and configures the first resource set for the terminal device for use. Because at a same transmission moment, the resources in the first resource set are used only by the terminal device or the terminal device group, when the terminal device configured with the first resource set performs communication by using the resource in the first resource set, downlink and uplink interference are reduced, and a switching frequency is reduced.

With reference to the second aspect, in a first possible implementation of the second aspect, the communications unit is further configured to receive scheduling information from the network device by using physical layer signaling, where the scheduling information is used to indicate a first resource in the first resource set, and the first resource is used by the terminal device to perform communication.

According to a fifth aspect, an embodiment of the present invention provides a network device. The network device includes a first determining unit and a sending unit, and the units are described as follows:
the first determining unit, configured to determine a first resource set, where resources in the first resource set include some resources in one cell or resources in a plurality of cells, the resources included in the first resource set are periodic, at a same transmission moment, the first resource set serves only one terminal device or one terminal device group, the terminal device group includes a plurality of terminal devices, and at different transmission moments, resources used for co-directional transmission in the first resource set occupy a same frequency domain position on a same carrier; and
the sending unit, configured to send resource configuration information to the terminal device by using higher layer signaling, where the resource configuration information is used to indicate the first resource set.

The network device further includes a second determining unit, and the second determining unit is configured to: before the sending unit sends the resource configuration information to the terminal device by using the higher layer signaling, determine that a height of the terminal device meets a preset condition or determine that the terminal device is in a preset flight state.

By running the units, the network device determines the first resource set and configures the first resource set for the terminal device for use. Because at a same transmission moment, the resources in the first resource set are used only by the terminal device or the terminal device group, when the terminal device configured with the first resource set performs communication by using the resource in the first resource set, downlink and uplink interference are reduced, and a switching frequency is reduced.

With reference to the fifth aspect, in a first possible implementation of the fifth aspect, when the first resource set serves only one terminal device group, the sending unit is further configured to send scheduling information to a first terminal device in the terminal device group by using physical layer signaling, where the scheduling information is used to indicate a first resource in the first resource set, and the first resource is used by the first terminal device to perform communication.

According to a sixth aspect, an embodiment of the present invention provides a terminal device. The terminal device includes a receiving unit and a determining unit, and each unit is described as follows: the receiving unit, configured to receive resource configuration information from a network device by using higher layer signaling, where the resource configuration information is used to indicate a first resource set, resources in the first resource set include some resources in one cell or resources in a plurality of cells, and the resources included in the first resource set are periodic, at a same transmission moment, the first resource set serves only the terminal device or one terminal device group, and the terminal device group includes a plurality of terminal devices including the terminal device, and at different transmission moments, resources used for co-directional transmission in the first resource set occupy a same frequency domain position on a same carrier; and the determining unit, configured to determine the first resource set based on the resource configuration information.

By running the units, the network device determines the first resource set and configures the first resource set for the terminal device for use. Because at a same transmission terminal device group, when the terminal device configured with the first resource set performs communication by using the resource in the first resource set, downlink and uplink interference are reduced, and a switching frequency is reduced.

With reference to the sixth aspect, in a first possible implementation of the sixth aspect, the receiving unit is further configured to receive scheduling information from the network device by using physical layer signaling, where the scheduling information is used to indicate a first resource in the first resource set, and the first resource is used by the terminal device to perform communication.

According to a seventh aspect, an embodiment of the present invention provides a chip system. The chip system includes at least one processor, a memory, and an interface circuit. The memory, a transceiver, and the at least one processor are connected to each other by using a line. The at least one memory stores an instruction, and when the instruction is executed by the processor, the first aspect, any possible implementation of the first aspect, the second aspect, or any possible implementation of the second aspect is implemented.

According to an eighth aspect, an embodiment of the present invention provides a computer-readable storage medium. The computer-readable storage medium stores an instruction, and when the instruction is run by a processor, the first aspect, any possible implementation of the first aspect, the second aspect, or any possible implementation of the second aspect is implemented.

According to a ninth aspect, an embodiment of the present invention provides a computer program product. When the computer program product is run on a processor, the first aspect, any possible implementation of the first aspect, the second aspect, or any possible implementation of the second aspect is implemented.

According to a tenth aspect, an embodiment of the present invention provides a communications system. The communications system includes a network device and a terminal device. The network device is the apparatus described in the third aspect, any possible implementation of the third aspect, the fifth aspect, or any possible implementation of the fifth aspect; and the terminal device is the apparatus described in the fourth aspect, any possible implementation of the fourth aspect, the sixth aspect, or any possible implementation of the sixth aspect.

With reference to any one of the foregoing aspects or any one of the foregoing possible implementations, in still another possible implementation, the heights of the plurality of terminal devices in the terminal device group all meet the preset condition or the plurality of terminal devices are all in the preset flight status.

With reference to any one of the foregoing aspects or any one of the foregoing possible implementations, in still another possible implementation, the first resource set forms a virtual cell, the resource configuration information includes identification information of the virtual cell. The identification information of the virtual cell includes at least one of a cell identifier of the virtual cell, a beam identifier in the virtual cell, information used to identify the terminal device, and an identifier of a sounding reference symbol SRS.

With reference to any one of the foregoing aspects or any one of the foregoing possible implementations, in still another possible implementation, the resource configuration information includes a cell identifier list of at least one physical cell to which the resources in the first resource set belong.

With reference to any one of the foregoing aspects or any one of the foregoing possible implementations, in still another possible implementation, the resource configuration information indicates, by indicating at least two of a start position, a length, a period, an offset, and an end position that are of a time domain, a time domain position included in the first resource set; or the resource configuration information indicates, by using a transmission time unit pattern, a time domain position included in the first resource set.

With reference to any one of the foregoing aspects or any one of the foregoing possible implementations, in still another possible implementation, the first resource set includes a time-frequency resource used for uplink transmission; and the uplink transmission includes transmission of a data channel, and includes transmission of at least one of a reference signal, a random access channel, and a control channel.

With reference to any one of the foregoing aspects or any one of the foregoing possible implementations, in still another possible implementation, the first resource set includes a time-frequency resource used for downlink transmission; and the downlink transmission includes transmission of the data channel, and includes transmission of at least one of a synchronization signal, a reference signal used for measurement or demodulation, and the control channel.

With reference to any one of the foregoing aspects or any one of the foregoing possible implementations, in still another possible implementation, the first resource set is preconfigured, or is determined by the network device through negotiation with another network device.

By implementing the embodiments of the present invention, the network device determines the first resource set and configures the first resource set for the terminal device for use. Because at a same transmission moment, the resources in the first resource set are used only by the terminal device or the terminal device group, when the terminal device configured with the first resource set performs communication by using the resource in the first resource set, downlink and uplink interference are reduced, and a switching frequency is reduced.

### BRIEF DESCRIPTION OF DRAWINGS

The following briefly describes the accompanying drawings required for the background or embodiments.
FIG. 1 is a schematic diagram of an unmanned aerial vehicle communication scenario in the prior art;
FIG. 2 is a schematic structural diagram of a communications system according to an embodiment of the present invention;
FIG. 3 is a schematic flowchart of a communication method according to an embodiment of the present invention;
FIG. 4 is a schematic composition diagram of a second cell according to an embodiment of the present invention;
FIG. 5 is a schematic structural diagram of a protocol stack according to an embodiment of the present invention;
FIG. 6A is a schematic diagram of a scenario of a plurality of carriers according to an embodiment of the present invention;
FIG. 6B is a schematic diagram of a scenario of a single carrier according to an embodiment of the present invention;
FIG. 7 is a schematic diagram of resource division in a first resource set according to an embodiment of the present invention;
FIG. 8 is a schematic diagram of another resource division in a first resource set according to an embodiment of the present invention;
FIG. 9 is a schematic structural diagram of a device according to an embodiment of the present invention;
FIG. 10 is a schematic structural diagram of another device according to an embodiment of the present invention;
FIG. 11 is a schematic structural diagram of another device according to an embodiment of the present invention; and
FIG. 12 is a schematic structural diagram of another device according to an embodiment of the present invention.

### DESCRIPTION OF EMBODIMENTS

The following describes the technical solutions in the embodiments of the present invention with reference to the accompanying drawings in the embodiments of the present invention.

FIG. 2 is a schematic structural diagram of a communications system according to an embodiment of this application. The communications system includes at least a terminal device 201, a network device 202, and another network device 203. Optionally, a device in the communications system 20 may perform communication by using a wireless communications technology. For example, the wireless communications technology may be a second-generation mobile communications technology (The 2nd-Generation, 2G), a third-generation mobile communications technology (The 3rd-Generation, 3G), long term evolution (LTE), a fourth-generation mobile communications technology (the 4th Generation mobile communication, 4G), a fifth-generation mobile communications technology (the 5th-Generation, 5G), a Wireless Fidelity (WI-FI) technology, a Bluetooth technology, a zigbee technology, another existing communications technology, a subsequently studied communications technology, or the like. The terminal device 201 may be a handheld device (for example, a mobile phone, a tablet, or a palmtop computer) having a wireless communications function, a vehicle-mounted device (for example, a car, a bicycle, an electric vehicle, an airplane, a ship, a train, or a high-speed railway), a wearable device (for example, a smartwatch, a smart band, or a pedometer), a smart home device (for example, a refrigerator, a television, an air conditioner, or an electric meter), a flight device (for example, an unmanned aerial vehicle or an airplane), a smart robot, a workshop device, another processing device that can be connected to a wireless modem, or user equipment, a mobile station (MS), a terminal device, or the like in various forms. The network device 202 and the another network device 203 (there may be one or more network devices) may be network side devices, for example, a gNodeB in 5G, an eNodeB in 4G, or any other device that can implement a wireless network access function.

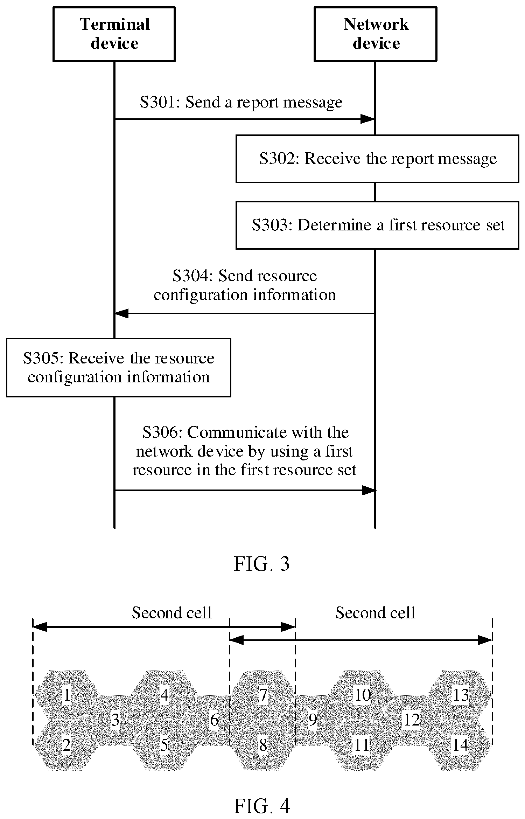

FIG. 3 is a schematic flowchart of a communication method according to an embodiment of the present invention. The method may be implemented based on the communications system shown in FIG. 2, and the method includes but is not limited to the following steps.

Step S301: A terminal device sends a report message to a network device.

Specifically, the terminal device performs signaling interworking with the network device, to enter a radio resource control (RRC) connected mode. After entering the connected mode, the terminal device may send the report message to the network device. The report message is used to report a current state of the terminal device. The report message is used to report a current height of the terminal device. The height is a height relative to the ground, an altitude, or a height in another form. Optionally, the report message is used to report a current location (for example, latitude and longitude) of the terminal device. Optionally, the report message is used to report a current moving speed of the terminal device. Optionally, the report message is used to report a type of device to which the terminal device belongs, for example, used to report that the terminal device belongs to a flight device (for example, an unmanned aerial vehicle). There are many possible cases of division of the type. This is not limited herein. Optionally, the report message is a measurement report used to represent signal strength of each cell around the terminal device. Content included in the report message may further be another case, which is not listed one by one herein. Optionally, the network device first sends configuration information to the terminal device, to instruct the terminal device to send the report message. Optionally, a condition for triggering sending of the report message is preconfigured for the terminal device, and when determining that the condition is met, the terminal device automatically sends the report message.

Step S302: The network device receives the report message sent by the terminal device.

Specifically, the network device needs to determine whether the terminal device is a device that meets a preset condition. The device that meets the preset condition includes a device in a preset flight state, a high-speed moving device, and a device in another similar scenario.

The network device determines, based on information included in the report message, whether the terminal device is the device that meets the preset condition, for example, determine, based on information such as a current height of the terminal device, a device type, and a signal of each measured cell that is included in the report message, whether the terminal device is the device that meets the preset condition.

Optionally, the network device may further send the report message to another network element. The another network element determines, based on the report message, whether the terminal device is the device that meets the preset condition, and notifies the network device of a determining result, so that the network device learns whether the terminal device is the device that meets the preset condition.

Optionally, the network device may further obtain authorization or authentication information of the terminal device by using another network element, to determine whether the terminal device is the device that meets the preset condition. The another network element may be a core network or another third-party node.

Step S303: The network device determines a first resource set.

The first resource set is used by the network device to communicate with the device that meets the preset condition, and resources in the first resource set include some resources in one cell or resources in a plurality of cells. Subsequently, each of the at least one cell may be referred to as a first cell.
Optionally, when the resources in the first resource set include resources in a plurality of first cells, one or more cells in the plurality of first cells may provide all resources to form the first resource set, or may provide some resources to form the first resource set. The resources in the first resource set may include only uplink transmission resources, may include only downlink transmission resources, or may include uplink transmission resources and the downlink transmission resources.

Further, the resources in the first resource set are periodic resources, or the resources in the first resource set are statically configured or semi-statically configured resources. Signaling interworking can be reduced by using the resources in the first resource set for communication, thereby reducing a delay and saving communication resources.

Further, at a same transmission moment, the first resource set serves only one terminal device or one terminal device group, the terminal device group includes a plurality of terminal devices, and at different transmission moments, resources used for co-directional transmission in the first resource set occupy a same frequency domain position on a same carrier.

The first resource includes a plurality of uplink carriers and/or downlink carriers. A quantity of uplink carriers, a quantity of downlink carriers, bandwidth of each carrier, and a position of each carrier in the first resource set may be notified, by using resource configuration information, to the terminal device or the terminal device group that is to be served by the first resource set. In this embodiment of the present invention, the plurality of terminal devices in the terminal device group all belong to the devices that meet the foregoing preset condition. For example, heights of the plurality of terminal devices in the terminal device group all meet the preset condition, or all of the plurality of terminal devices are in the preset flight status.

Frequency domain resources in the first resource set may be some resources in a system bandwidth, for example, a range of a segment of resource blocks (RB) and a range of a segment of resource elements (RE). In addition to the frequency domain resources, the first resource set may further include a resource in at least one dimension of a time domain, a code domain, and a beam domain, and certainly may also include a resource in another dimension. When the first resource set includes a time domain resource, a unit of the time domain resource may be an existing frame, subframe, symbol, slot, or mini slot, namely, a basic transmission unit, a symbol group, or the like, or may be a scheduling time unit that is in another form and is subsequently proposed. Subsequently, an example in which the unit of the time domain resource is a subframe may be used for description. When the at least one first cell is a plurality of first cells, the plurality of first cells provide a same time-frequency resource for the first resource set. At a same transmission moment, resources provided by the first resource set are configured only for the terminal device or the terminal device group served by the first resource set, thereby reducing interference of the terminal device in a downlink direction and an uplink direction to some extent; and when the first resource set includes the resources provided by the plurality of first cells, coverage of the plurality of cells increases, and a switching frequency of the terminal device is also reduced.

Optionally, when the resources in the first resource set are used only by the terminal device group, and the terminal device group includes the terminal device and another terminal device, the resources in the first resource set may be allocated to and used by the plurality of terminal devices in the terminal device group. For ease of differentiation, a resource scheduled to the terminal device may be referred to as a first resource, and a resource scheduled to the another terminal device may be referred to as a second resource. The first resource and the second resource are non-overlapping. The non-overlapping herein means that at least one of a time domain, a frequency domain, a code domain, and a beam domain of the first resource is different from that of the second resource.

In this embodiment of the present invention, the first resource set may be determined by the network device through negotiation with another network device, or the resources provided by each first cell of the at least one first cell may be configured by the network device through operation and maintenance (OAM). Alternatively, the first resource set may be defined in a protocol. For example, it is defined in a protocol that a known first cell 1, first cell 2, first cell 3, first cell 4, first cell 5, first cell 6, first cell 7, and first cell 8 each allocate some resources to form the first resource set, and the resources allocated by each first cell in these first cells may be determined based on requirements.

Further, in an optional solution, the first resource set may form a second cell (which may also be referred to as a "virtual cell"), and the second cell also has its own cell identifier. Because the first resource set includes some resources of one first cell or resources of a plurality of first cells, a signal coverage area of the second cell is a union set of signal coverage areas of the at least one first cell. In this case, when the terminal device moves within the coverage of the second cell, cell handover is not required. In addition, in a cellular network, there may be a plurality of second cells (two second cells are shown in FIG. 4) that are configured similarly and that each includes a corresponding resource set. The plurality of second cells may form a single frequency network, and all second cells in the plurality of second cells provide same frequency domain resources.

In a second optional solution, the first resource set does not form a new second cell. When moving, the terminal device served by the first resource set may hand over between the plurality of first cells. Optionally, carriers of first cells forming a same second cell are the same. If two first cells are separately used to form different second cells, carriers of the two first cells are different.

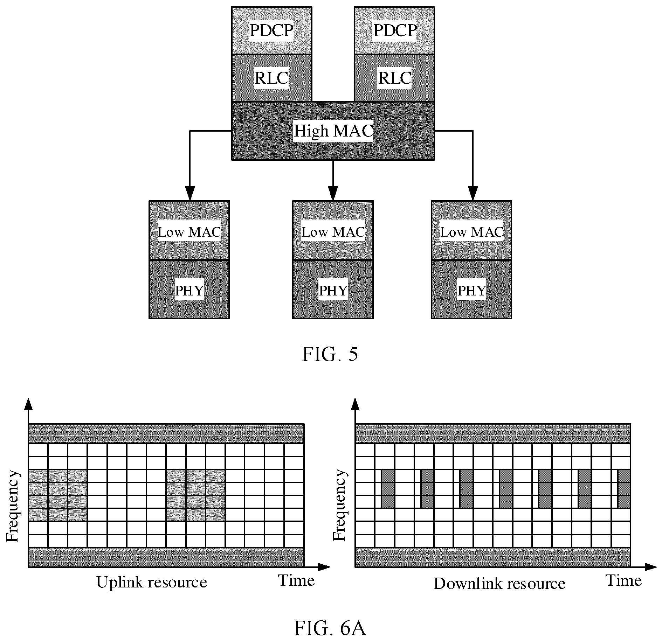

Further, when the terminal device performs communication in the cellular network, there is an S1 link, and specifically, the S1 link is an S1 link between a core network and a control unit (CU) (which may be the network device). A downlink data transmission process is as follows: After receiving data sent by the core network, the CU distributes the data to at least one data unit (DU) (each DU may be a network device of one first cell in the at least one first cell), and then, each of the at least one DU sends the received data to the terminal device. An uplink data transmission process is as follows: The terminal device sends data to the at least one DU, the at least one DU sends the received data to the CU, and the CU sends the received data to the core network after receiving the data sent by the at least one DU. A specific protocol stack setting is shown in FIG. 5. Protocol stacks of the CU and the DU are separated at a media access control (media access control, MAC) layer, and a part of the MAC layer in the CU may be referred to as high MAC (whose functions include generation and reception, multiplexing and demultiplexing, and a scheduling function that are of a MAC layer MAC control element (MAC CE)). A part of the MAC layer in the DU may be referred to as low MAC (whose functions include uplink hybrid automatic repeat request (HARQ) and downlink bundling sending). The at least one DU needs to use a same frequency domain resource to send same data to the terminal device at the same time. For example, the at least one DU needs to send a resource block TB1 to the terminal device at the same time on RBs 10 to 15 in a subframe 3 of an SFN2. To implement this function, first, the TB1 is generated by the high MAC, and then is transmitted to the low MAC for sending. A specific sending moment further needs to be indicated when the TB1 data packet is transmitted to the low MAC, so that the low MAC of the at least one DU sends the TB1 at the sending moment. Information indicating the sending moment may be a specific frame number and a specific subframe number, or may be an index value indicating a moment (for example, 10 seconds are used as a period, and includes a total of 10000 milliseconds (ms), and index values from 0 to 9999 may be set to sequentially mark the 1^{st} ms to the 10000^{th} ms).

Optionally, each of the foregoing at least one first cell belongs to one network device. It is assumed that the at least one first cell belongs to a plurality of network devices. The plurality of network devices include one anchor network device and at least one node network device, the plurality of network devices may form a CU-DU separation architecture shown in FIG. 5. The anchor network device is a central unit CU, and the at least one node network device is a data unit DU.

For downlink transmission, each DU sends same data to the terminal device on a same time-frequency resource by using a same modulation and coding scheme. For downlink, the bundling sending is used instead of the HARQ to improve reliability.

For uplink transmission, the terminal device may send data on the resources of the first resource set, the data is received by a plurality of DUs, and each DU performs a CRC check on the data. If a CRC check result is correct, an ACK is fed back to the terminal. If the CRC check result is incorrect, no data is fed back to the terminal device. In this case, for one uplink data transmission, if the terminal device can detect the ACK fed back by the DU, it is determined that the data is successfully sent. If no ACK is received (for example, an ACK is received on a specified time-frequency resource, or no ACK is received within a period of time), it is determined that the data transmission fails. When determining that the data transmission fails, the terminal device initiates uplink data retransmission. There are the following two retransmission modes:

Mode 1: HARQ retransmission mode That is, a different redundancy version is used in each retransmission. In this case, the terminal device needs to indicate a HARQ process number and corresponding redundancy version index information to the DU. Because the HARQ process number and the corresponding redundancy version index information relate to data packet demodulation, the HARQ process number and the corresponding redundancy version index information cannot be placed in a transport block, and need to be indicated in a physical layer manner. In one manner, different positions are used on a dedicated RE or RB resource to indicate a corresponding HARQ process number and corresponding redundancy version index information. For example, six RBs of the first symbol in each subframe are used to indicate a HARQ process number and a corresponding redundancy version index. In another manner, indication is performed by using an uplink demodulation reference signal (DMRS). For example, the DMRS has different cyclic shift values, and may also have different orthogonal cover codes (OCC). The cyclic shift value of the DMRS may correspond to a HARQ process number, and an OCC index may correspond to a redundancy version index. A range of the cyclic shift value is from 0 to 11, and a range of the HARQ process number is from 0 to 7, so that complete corresponding is implemented. A range of the OCC code index is from 0 to 1, a range of the redundancy version index is from 0 to 3, and complete corresponding cannot be implemented. The OCC code index may be expanded (for example, extended to 0 to 3) or an available redundancy version may be reduced (for example, only 1 and 2 are used).

Mode 2: non-HARQ retransmission mode That is, a redundancy version for each retransmission is 0. This is equivalent to performing new transmission. In this case, only data needs to be sent, and the HARQ process number and the redundancy version index do not need to be indicated.

Optionally, the resource indication information may further indicate specific scheduling information, including but not limited to frequency domain position information (for example, indicating that the TB1 is sent on the resource block RB 10 to the resource block 15), modulation and coding scheme (MCS) information, frequency hopping indication information, channel quality indicator (CQI) reporting indication information, and the like.

Step S304: The network device sends resource configuration information to the terminal device.

When the foregoing second cell exists, a cell on which the terminal device camps is the second cell. When the second cell does not exist, a cell on which the terminal device camps is a first cell of the at least one first cell. The network device carries the resource configuration information by using higher layer signaling. The higher layer signaling may be sent on at least one of an RRC protocol, a MAC protocol, a radio link control (RLC) protocol, and a packet data convergence protocol (PDCP). When the second cell exists, the resource configuration information includes an identifier of the second cell on which the terminal device camps, and the identifier of the second cell may be defined in a format of a virtual cell identifier or a physical cell identifier.

Further optionally, the resource configuration information further includes an identifier of the at least one first cell that provides resources for the second cell.

When the second cell does not exist, the resource configuration information includes an identifier of the first cell on which the terminal device camps or/and a list of first cells that jointly form the first resource set. The resource configuration information may include a physical layer configuration of a cell on which the terminal device currently camps/serves, and may further include a cell identifier of the cell on which the terminal currently camps/serves, access information of the terminal device in the cell on which the terminal camps/serves, a higher layer configuration of the terminal in the cell on which the terminal camps/serves, and the like. The following separately describes information included in the resource configuration information and information that may be included in the resource configuration information.

Physical layer configuration: The physical layer configuration includes information used to indicate the first resource set. There are a plurality of possible manners of indicating a frequency domain in the first resource set. Optionally, a frequency domain of a resource in the first resource set may be indicated by indicating at least two of a start position, a bandwidth, and an end position that are of the frequency domain. Alternatively, frequency bands in a system bandwidth may be numbered in advance. In this way, a frequency domain sequence number may be indicated to indicate a frequency band corresponding to the frequency domain sequence number, and other indication manners are not listed one by one herein.

When the first resource set includes a time domain resource, time domain indication manners include but are not limited to the following manners:
Manner 1: The resource configuration information indicates, by indicating at least two of a start position, a length, a period, an offset, and an end position that are of the time domain, a time domain position included in the first resource set. For example, the time domain in the first resource set is indicated in a unit of a subframe and in a manner of indicating the period and the offset. Assuming that the period is T, an offset value is offset, and a total quantity of subframes in one frame is M, a subframe number x included in the first resource set may be calculated according to the following formula: x = (T * N + offset) mod (M), where N is a sequence number of a resource period in the first resource set, and N starts to be calculated from 0. Alternatively, a subframe number x included in the first resource set may be calculated according to the following formula: x = (T * (N - 1) + offset) mod (M), where N is a sequence number of a resource period in the first resource set, and N starts to be calculated from 1. Taking a period of 5 ms as an example, for the second subframe in the period of 5 ms (for example, a number of the second subframe is #1, and a number of the first subframe is #0), effective resource duration is 1 ms, namely, a subframe, so that the subframe number in the third period is x = (5 * (3 - 1) + 1) mod 10.
Manner 2: Calculation is performed jointly by using a frame number and a subframe number. For example, (10 * SFN + subframe) = [(10 * SFNstart time + subframestart time) + N * period value] modulo 10240, where SFN is a frame number, subframe is a subframe number, and SFNstart time and subframestart time are a start frame number and subframe number of semi-persistent scheduling. Compared with the manner 1, the frame number is introduced into the formula. Therefore, frame numbers of the network device and the another network device need to be the same. In addition, in this manner, a period of more than one frame length may also be used.
Manner 3: The resource configuration information indicates, by using a transmission time unit pattern, a time domain position included in the first resource set, and directly indicates a fixed subframe (which is a scheduling time unit) pattern, that is, directly specifies a specific frame number and subframe number that are used for the first resource set. For example, it is specified that a subframe 1 and a subframe 2 in an odd-numbered frame are subframes in the first resource set. Alternatively, only the subframe number may be specified, that is, a corresponding subframe in each frame belongs to the first resource set.

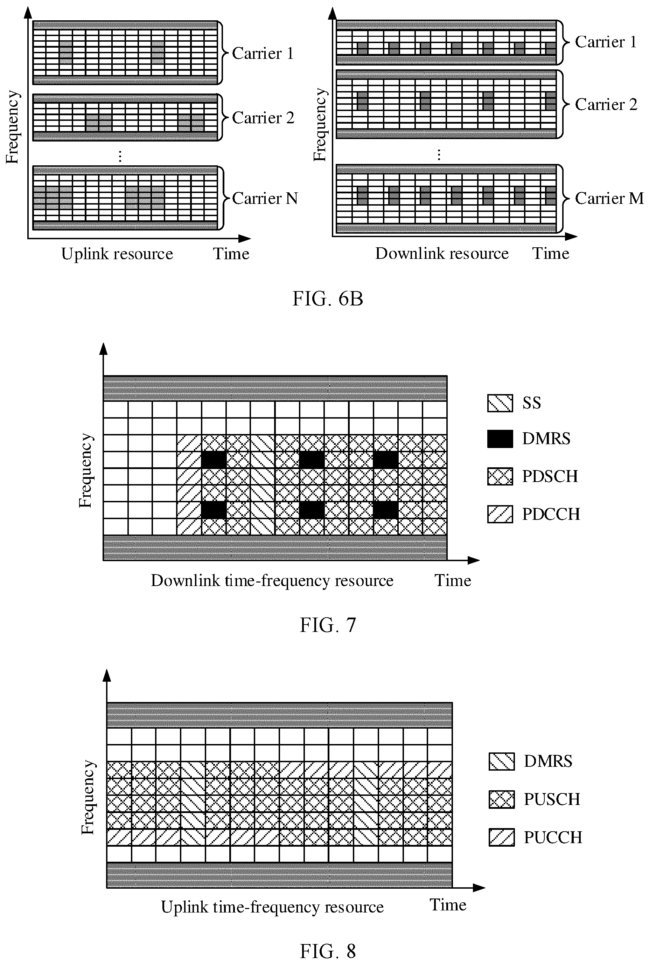

In addition, when the first resource set includes an uplink resource and a downlink resource, a parameter used to indicate the downlink resource may be the same as or may be different from a parameter used to indicate the uplink resource. For example, it is assumed that the first resource set includes a plurality of carriers. As shown in FIG. 6A, the uplink resource includes N carriers (N is a positive integer), and a time position of the uplink resource is in a unit of a symbol group. Each resource in a carrier 1 occupies one symbol in time domain, each symbol interval is six symbols, and the resource occupies four resource blocks RBs in frequency domain; each resource in a carrier 2 occupies two symbols in time domain, each symbol group interval is five symbols, and the resource occupies three RBs in frequency domain; and each resource in a carrier N includes three time-domain symbols, each symbol group interval is four symbols, and the resource occupies four RBs in frequency domain. The downlink resource includes M carriers (M is a positive integer), and a length of a single subframe is used as a unit in time domain. A period of the carrier 1 is two subframes, an offset value is 1, and the downlink resource occupies two RBs in frequency domain; a period of the carrier 2 is four subframes, an offset value is 1, and the downlink resource occupies three RBs in frequency domain; and a period of a carrier M is two subframes, an offset value is 1, and the downlink resource occupies three RBs in frequency domain. Therefore, one virtual communication area subframe appears in every two subframes. For another example, it is assumed that the first resource set includes one carrier. As shown in FIG. 6B, a time position of the uplink resource is in a unit of a symbol group, each resource includes three time-domain symbols, and each symbol group interval is four symbols. However, the downlink resource is in a unit of a length of a single subframe, a period is two subframes, and an offset value is 1. Therefore, one virtual communication area subframe appears in every two subframes. Optionally, the downlink resource in the first resource set does not occupy all symbols in the subframe, but occupies only some symbols. For example, the downlink resource occupies last 11 symbols in the subframe, and first three symbols are still used for a physical downlink control channel (PDCCH) (for example, the subframe includes 14 symbols).

Optionally, a plurality of channels may exist in the first resource set. For example, when the first resource set forms a second cell, a relatively large quantity of channels in the first resource set need to be allocated to support normal running of the second cell. The network device may indicate a channel division solution in the first resource set by using the foregoing physical configuration, or certainly, a channel division manner in the first resource set may be specified in a protocol. In this way, the network device does not need to indicate the channel division solution in the first resource set by using the foregoing physical configuration. For ease of understanding, several possible channel division solutions are exemplified below:
Solution 1: The first resource set includes a time-frequency resource used for downlink transmission and a time-frequency resource used for uplink transmission, and both the time-frequency resource used for downlink transmission and the time-frequency resource used for uplink transmission may be used for data channel transmission.
Solution 2: The first resource set includes a time-frequency resource used for downlink transmission and a time-frequency resource used for uplink transmission, and both the time-frequency resource used for downlink transmission and the time-frequency resource used for uplink transmission may be used for data channel transmission. In addition, the downlink transmission includes transmission of at least one of a synchronization signal, a reference signal used for measurement or demodulation, and a control channel, and the uplink transmission includes transmission of at least one of a reference signal, a random access channel, and a control channel.

Optionally, a type of a channel included in the first resource set may be similar to a channel division manner in long term evolution ( LTE), and is a compressed version relative to LTE (because a resource range of available time-frequency resources in LTE is far greater than a resource range of the first resource set). As shown in FIG. 7, it is assumed that a time domain of the time-frequency resource used for downlink transmission in the first resource set includes last 11 symbols (an index range of the 11 symbols is from 3 to 13) in a subframe, and a frequency domain includes six RBs. In this case, the control channel and a synchronization channel each occupy a separate symbol, a data channel occupies another symbol, and demodulation reference signals used for channel estimation are distributed in the data channel. The control channel may carry scheduling indication information for the terminal device. As shown in FIG. 8, assuming that a time domain of the time-frequency resource used for uplink transmission in the first resource set includes one subframe and occupies five RBs in frequency domain, so that the control channel may be enabled to occupy one RB. Optionally, a frequency hopping design may further be used, that is, frequency domain positions occupied in two slots are different. The demodulation reference signal occupies two symbols: a symbol 3 and a symbol 10. Remaining positions are occupied by the data channel, and the terminal device may alternatively feed back an acknowledgment (ACK)/negative acknowledgement (NACK) of downlink data in the data channel.

The foregoing physical layer configuration may further indicate other information, for example, at least one reference signal or sequence of a cell on which the terminal camps, at least one physical channel, antenna information, a scrambling code sequence index (SCID), precoding information, channel matrix information, codebook information, layer information, a quantity of antenna ports, an antenna port number, beam optimization capability information, effective time, effective duration, a control channel, a cyclic prefix (CP) length, and power control information, where the at least one reference signal or sequence can be used for at least one of cell synchronization, channel demodulation, channel assessment, and radio resource management (RRM) measurement. When the first resource set includes the control channel, the physical layer configuration may be used to instruct the control channel to use an enhanced control channel. A beamforming function can be implemented by using the enhanced control channel, and common and/or dedicated control information of the cell on which the terminal camps is carried. For example, a configuration related to a beam characteristic may be indicated, and may specifically include at least one of the following attributes: a reference signal (for example, a demodulation reference signal (DM-RS)), an SCID scrambling sequence index number (0 or 1), precoding, codebook information, a quantity of ports, a port number, effective time, and effective duration. In addition, the control channel of the cell may use an ePDCCH or another enhanced control channel, and this type of control channel may implement the beamforming function like a physical downlink shared channel (PDSCH), and the common and/or dedicated control information may be carried on this type of control channel for transmission.

Cell identifier of the cell on which the terminal camps/serves: When the first resource set forms a second cell, the cell on which the terminal camps/serves is the second cell, and a cell identifier (the second cell may also be referred to as a virtual cell, and a cell identifier of the virtual cell may be a VCID) of the second cell may be a beam identifier, an identifier of a sounding reference symbol (SRS), information (for example, an identifier, an identification code, and a sequence) used to identify the terminal, and the like. In this embodiment of the present invention, because a resource used by the terminal is from the first resource set including the resources provided by the at least one first cell, the resource configuration information may further include an identifier of the first resource set or a cell identifier list of the at least one first cell (which may also be referred to as a physical cell) to which the resource in the first resource set belongs. The identifier of the first resource set includes at least one of a cell identifier of the second cell, a beam identifier, identification information of the terminal, and an identifier of a sounding reference symbol SRS.

Access information of the cell on which the terminal camps/serves: for example, capability information of the cell on which the terminal camps/serves, service information that can be provided, a public land mobile network (PLMN) identifier, a tracking area (TA) code, carrier/frequency information, working mode information, logical channel configuration information, a physical channel, signaling configuration information, timer information, and the like.

Higher layer configuration of the cell on which the terminal camps/serves: configurations of a PDCP layer, an RLC layer, and/or a MAC layer that correspond to a signaling bearer or a data bearer of the terminal, which help the network device accurately adjust measurement information of the beam characteristic. A measurement configuration may be included. The measurement information may further include measurement control and measurement reporting control information for controlling the terminal device to select, from first cells that jointly form the first resource set, a coordinated set of at least one first cell that joint provides a service for the terminal device. The measurement control information includes at least one of the following information: a measurement object, for example, information about a to-be-measured frequency band and/or cell; an objective of measurement, which is to select, from the first cells that jointly form the first resource set, the coordinated set of the at least one first cell that joint provides a service for the terminal device; information about a to-be-measured reference signal, a synchronization signal (SS), a cell-specific pilot (CRS), and a channel state information measurement pilot (channel state information RS, CSI-RS) and/or DM-RS; and a measurement period. The measurement reporting control information includes at least one of the following information: an event definition of the coordinated set that is of the at least one first cell that joint provides a service for the terminal device and that is selected by the terminal device from the first cells that jointly form the first resource set; a limit on a quantity of reported cells; a measurement result type; and a triggering hysteresis time of a measurement report.

Step S305: The terminal device receives the resource configuration information sent by the network device.

Specifically, the terminal device parses out the physical layer configuration in the resource configuration information. When the resource configuration information further includes other information, the terminal device further parses out other information, for example, access information and higher layer configuration, in the resource configuration information. The terminal device determines the first resource set, the channel division solution in the first resource set, the foregoing first resource, and the like based on the physical layer configuration. Subsequently, the terminal device may further successfully demodulate, based on the physical layer configuration, data and/or control information from the camped cell. For example, the terminal device obtains antenna port information, layer information, and a scrambling identity from the control information (for example, an SCID in downlink control information (DCI)), to obtain a specific resource position of a reference signal in the camped cell. Then, the terminal device measures the reference signal, to obtain H*W (a channel matrix*codebook (or referred to as a weighting vector)) or H (a channel matrix). Then, the terminal device can demodulate the data and/or the control information from the camped cell successfully based on HW or H. After receiving control information sent by the network device, the terminal device parses the control information, to obtain subcarrier information, channel information, time-frequency information, and the like that are indicated by the control information. At least one beam including an antenna provides a plurality of physical channels such as a common control channel, a dedicated control channel, a traffic channel, and the like of a communications cell, and the beam may be further used for data transmission between the terminal device and the network device.

Optionally, when the terminal device parses out, from the resource configuration information, information such as a cell identifier, access information, higher layer configuration, and the like of the cell on which the first terminal camps, a manner in which the terminal device uses the information is similar to a manner in which the information is used in the prior art. A specific principle is not described herein.

Step S306: The terminal device communicates with the network device by using the first resource in the first resource set.

Specifically, when communicating with the network device, the terminal device uses a physical cell identifier (Physical Cell Identifier, PCI) and a cell radio network temporary identifier (cell radio network temporary identifier, C-RNTI) of the camped cell. In a communication process, the terminal device performs synchronization and measurement on an SS of the camped cell, measures a CRS format of the camped cell, selects, based on a defined period and an event trigger pair and from the first cells that jointly form the first resource set, a coordinated set of the at least one first cell that jointly forms the first resource set, and the like. Therefore, when the foregoing second cell exists, the terminal device uses a second cell identifier (which may be referred to as a VCID, and is equivalent to the foregoing PCI) and a C-RNTI when communicating with the network device. In the communication process, the terminal device synchronizes and measures an SS of the second cell, and measures a CRS format of the second cell.

Optionally, when the first resource set serves only one terminal device group and the terminal device is a device (which may be referred to as a first terminal device) in the terminal device group, after the network device sends the foregoing resource configuration information to the terminal device, the network device further sends scheduling information to the first terminal device. The scheduling information is used to indicate the first resource in the first resource set. Therefore, the first terminal device may first determine the first resource set based on the resource configuration information, further determine the first resource in the first resource set based on the scheduling information, and then communicate with the network device by using the first resource.

Optionally, when the first resource set serves only one terminal device, after determining the first resource set based on the resource configuration information, the terminal device communicates with the network device by using all resources in the first resource set, or selects some resources from the first resource set according to a predefined rule to communicate with the network device.

In the method shown in FIG. 3, the network device determines the first resource set and configures the first resource set for the terminal device for use. Because at a same transmission moment, the resources in the first resource set are used only by the terminal device or the terminal device group, when the terminal device configured with the first resource set performs communication by using the resource in the first resource set, downlink and uplink interference are reduced, and a switching frequency is reduced.

The methods in the embodiments of the present invention are described in detail above, and apparatuses in the embodiments of the present invention are provided below.

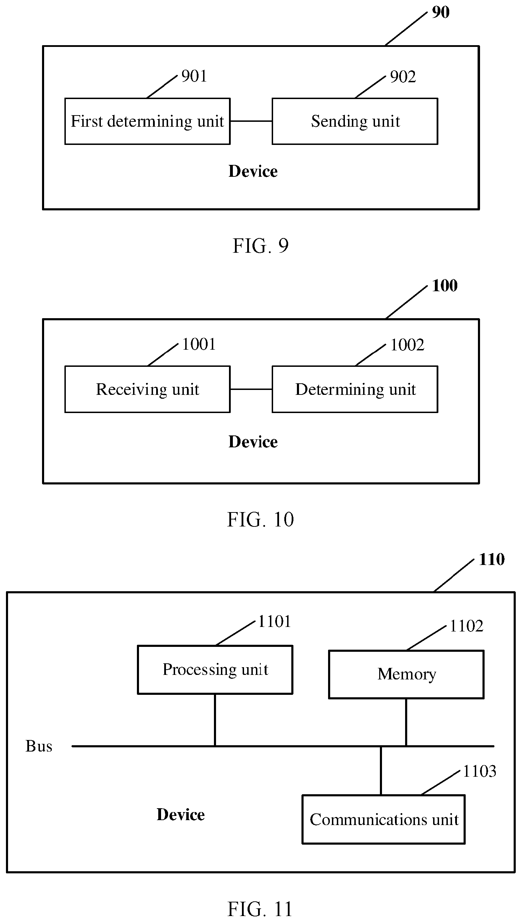

FIG. 9 is a schematic structural diagram of a device 90 according to an embodiment of the present invention. The device is the network device in the foregoing method embodiment, the device 90 may include a first determining unit 901 and a sending unit 902, and the units are described as follows: The first determining unit 901 is configured to determine a first resource set. Resources in the first resource set include some resources in one cell or resources in a plurality of cells, and the resources included in the first resource set are periodic. At a same transmission moment, the first resource set serves only one terminal device or one terminal device group, and the terminal device group includes a plurality of terminal devices. At different transmission moments, resources used for co-directional transmission in the first resource set occupy a same frequency domain position on a same carrier. The sending unit 902 is configured to send resource configuration information to the terminal device by using higher layer signaling, and the resource configuration information is used to indicate the first resource set.

By running the units, the network device determines the first resource set and configures the first resource set for the terminal device for use. Because at a same transmission moment, the resources in the first resource set are used only by the terminal device or the terminal device group, when the terminal device configured with the first resource set performs communication by using the resource in the first resource set, downlink and uplink interference are reduced, and a switching frequency is reduced.

In an optional solution, when the first resource set serves only one terminal device group, the sending unit is further configured to send scheduling information to a first terminal device in the terminal device group by using physical layer signaling. The scheduling information is used to indicate a first resource in the first resource set, and the first resource is used by the first terminal device to perform communication.

In another optional solution, the network device further includes a second determining unit, and the second determining unit is configured to: before the sending unit sends the resource configuration information to the terminal device by using the higher layer signaling, determine that a height of the terminal device meets a preset condition or determine that the terminal device is in a preset flight status.

It should be noted that for implementation of the units, reference may be made to corresponding descriptions in the method embodiment shown in FIG. 3.

In the network device 90 described in FIG. 9, the network device determines the first resource set and configures the first resource set for the terminal device for use. Because at a same transmission moment, the resources in the first resource set are used only by the terminal device or the terminal device group, when the terminal device configured with the first resource set performs communication by using the resource in the first resource set, downlink and uplink interference are reduced, and a switching frequency is reduced.

FIG. 10 is a schematic structural diagram of a device 100 according to an embodiment of the present invention. The device 100 is the terminal device in the foregoing method embodiments, the terminal device 100 may include a receiving unit 1001 and a determining unit 1002, and each unit is described as follows: The receiving unit 1001 is configured to receive resource configuration information from a network device by using higher layer signaling. The resource configuration information is used to indicate a first resource set, resources in the first resource set include some resources in one cell or resources in a plurality of cells, and the resources included in the first resource set are periodic. At a same transmission moment, the first resource set serves only the terminal device or one terminal device group, and the terminal device group includes a plurality of terminal devices including the terminal device. At different transmission moments, resources used for co-directional transmission in the first resource set occupy a same frequency domain position on a same carrier. The determining unit 1002 is configured to determine the first resource set based on the resource configuration information.

By running the units, the network device determines the first resource set and configures the first resource set for the terminal device for use. Because at a same transmission moment, the resources in the first resource set are used only by the terminal device or the terminal device group, when the terminal device configured with the first resource set performs communication by using the resource in the first resource set, downlink and uplink interference are reduced, and a switching frequency is reduced.

In an optional solution, the receiving unit is further configured to receive scheduling information from the network device by using physical layer signaling. The scheduling information is used to indicate a first resource in the first resource set, and the first resource is used by the terminal device to perform communication.

It should be noted that for implementation of the units, reference may be made to corresponding descriptions in the method embodiment shown in FIG. 3.

In the device 100 described in FIG. 10, the network device determines the first resource set and configures the first resource set for the terminal device for use. Because at a same transmission moment, the resources in the first resource set are used only by the terminal device or the terminal device group, when the terminal device configured with the first resource set performs communication by using the resource in the first resource set, downlink and uplink interference are reduced, and a switching frequency is reduced.

FIG. 11 is a device 110 according to an embodiment of the present invention. The device 110 is the network device in the foregoing method embodiment. The device 110 includes a processing unit 1101 and a communications unit 1103. The processing unit 1101 may be a processor, the communications unit 1103 may be a wireless or wired transceiver (for example, a radio frequency module). In addition, the device 110 may further include a memory 1102. The memory is configured to store an instruction. The processing unit 1101 may invoke the instruction in the memory 1102 to perform some operations. The processing unit 1101, the memory 1102, and the communications unit 1103 are connected to each other by using a bus.

The memory 1102 includes, but is not limited to, a random access memory (RAM), a read-only memory (ROM), an erasable programmable read-only memory (EPROM), or a portable read-only memory (CD-ROM). The memory 1102 is configured to store a related instruction and data. The transceiver 1903 is configured to receive and send data.

The processing unit 1101 may be one or more central processing units (CPU). When the processing unit 1101 is one CPU, the CPU may be a single-core CPU or a multi-core CPU.

Operations performed by the processing unit 1101 and the communications unit 1103 are as follows:

The processing unit 1101 determines a first resource set, resources in the first resource set include some resources in one cell or resources in a plurality of cells, and the resources included in the first resource set are periodic. At a same transmission moment, the first resource set serves only one terminal device or one terminal device group, and the terminal device group includes a plurality of terminal devices. At different transmission moments, resources used for co-directional transmission in the first resource set occupy a same frequency domain position on a same carrier. The communications unit 1103 sends resource configuration information to the terminal device by using higher layer signaling, and the resource configuration information is used to indicate the first resource set.

By performing the operations, the network device determines the first resource set and configures the first resource set for the terminal device for use. Because at a same transmission moment, the resources in the first resource set are used only by the terminal device or the terminal device group, when the terminal device configured with the first resource set performs communication by using the resource in the first resource set, downlink and uplink interference are reduced, and a switching frequency is reduced.

In an optional solution, the communications unit is further configured to send scheduling information to a first terminal device in the terminal device group by using physical layer signaling. The scheduling information is used to indicate a first resource in the first resource set, and the first resource is used by the first terminal device to perform communication.

In another solution, before the communications unit sends the resource configuration information to the terminal device by using the higher layer signaling, the processing unit is further configured to determine that a height of the terminal device meets a preset condition or determine that the terminal device is in a preset flight state.

It should be noted that for implementation of each operation, refer to corresponding descriptions in the method embodiment shown in FIG. 3.

In the network device 110 described in FIG. 11, the network device determines the first resource set and configures the first resource set for the terminal device for use. Because at a same transmission moment, the resources in the first resource set are used only by the terminal device or the terminal device group, when the terminal device configured with the first resource set performs communication by using the resource in the first resource set, downlink and uplink interference are reduced, and a switching frequency is reduced.

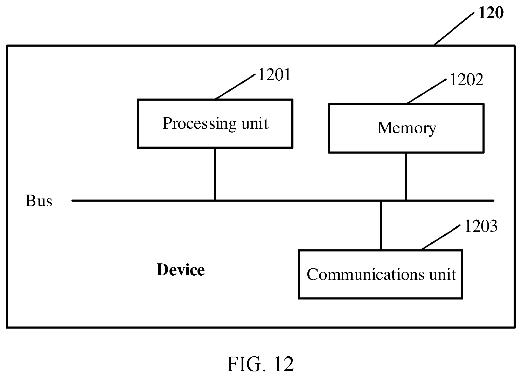

FIG. 12 is a device 120 according to an embodiment of the present invention. The device 120 is the terminal device in the foregoing method embodiments. The device 120 includes a processing unit 1201 and a communications unit 1203. The processing unit 1201 may be a processor, the communications unit 1203 may be a wireless or wired transceiver (for example, a radio frequency module). In addition, the device 120 may further include a memory 1202. The memory is configured to store an instruction. The processing unit 1201 may invoke the instruction in the memory 1202 to perform some operations. The processing unit 1201, the memory 1202, and the communications unit 1203 are connected to each other by using a bus.

The memory 1202 includes, but is not limited to, a random access memory (RAM), a read-only memory (ROM), an erasable programmable read-only memory (EPROM), or a portable read-only memory (CD-ROM). The memory 1202 is configured to store a related instruction and data. The transceiver 1903 is configured to receive and send data.

The processing unit 1201 may be one or more central processing units (CPU). When the processing unit 1201 is one CPU, the CPU may be a single-core CPU or a multi-core CPU.

Operations performed by the processing unit 1201 and the communications unit 1203 are as follows:
The communications unit 1203 receives resource configuration information from a network device by using higher layer signaling. The resource configuration information is used to indicate a first resource set, resources in the first resource set include some resources in one cell or resources in a plurality of cells, and the resources included in the first resource set are periodic. At a same transmission moment, the first resource set serves only the terminal device or one terminal device group, and the terminal device group includes a plurality of terminal devices including the terminal device. At different transmission moments, resources used for co-directional transmission in the first resource set occupy a same frequency domain position on a same carrier. The processing unit 1201 determines the first resource set based on the resource configuration information.

By performing the operations, the network device determines the first resource set and configures the first resource set for the terminal device for use. Because at a same transmission moment, the resources in the first resource set are used only by the terminal device or the terminal device group, when the terminal device configured with the first resource set performs communication by using the resource in the first resource set, downlink and uplink interference are reduced, and a switching frequency is reduced.

In an optional solution, the communications unit is further configured to receive scheduling information from the network device by using physical layer signaling. The scheduling information is used to indicate a first resource in the first resource set, and the first resource is used by the terminal device to perform communication.

It should be noted that for implementation of each operation, refer to corresponding descriptions in the method embodiment shown in FIG. 3.

In the terminal device 120 described in FIG. 12, the network device determines the first resource set and configures the first resource set for the terminal device for use. Because at a same transmission moment, the resources in the first resource set are used only by the terminal device or the terminal device group, when the terminal device configured with the first resource set performs communication by using the resource in the first resource set, downlink and uplink interference are reduced, and a switching frequency is reduced.

Optionally, in the embodiments shown in FIG. 9 to FIG. 12, heights of the plurality of terminal devices in the terminal device group all meet the preset condition or the plurality of terminal devices are all in the preset flight status.

Optionally, in the embodiments shown in FIG. 9 to FIG. 12, the first resource set forms a virtual cell, the resource configuration information includes identification information of the virtual cell, and the identification information of the virtual cell includes at least one of a cell identifier of the virtual cell, a beam identifier in the virtual cell, information used to identify the terminal device, and an identifier of a sounding reference symbol SRS.

Optionally, in the embodiments shown in FIG. 9 to FIG. 12, the resource configuration information includes a cell identifier list of at least one physical cell to which the resources in the first resource set belong.

Optionally, in the embodiments shown in FIG. 9 to FIG. 12, the resource configuration information indicates, by indicating at least two of a start position, a length, a period, an offset, and an end position that are of a time domain, a time domain position included in the first resource set; or the resource configuration information indicates, by using a transmission time unit pattern, a time domain position included in the first resource set.

Optionally, in the embodiments shown in FIG. 9 to FIG. 12, the first resource set includes a time-frequency resource used for uplink transmission; and the uplink transmission includes transmission of a data channel, and includes transmission of at least one of a reference signal, a random access channel, and a control channel.

Optionally, in the embodiments shown in FIG. 9 to FIG. 12, the first resource set includes a time-frequency resource used for downlink transmission; and the downlink transmission includes transmission of a data channel, and includes transmission of at least one of a synchronization signal, a reference signal used for measurement or demodulation, and the control channel.

Optionally, in the embodiments shown in FIG. 9 to FIG. 12, the first resource set is preconfigured, or is determined by the network device through negotiation with another network device.

An embodiment of the present invention provides a chip system. The chip system includes at least one processor, a memory, and an interface circuit. The memory, the transceiver, and the at least one processor are connected to each other by using a line. The at least one memory stores an instruction, and when the instruction is executed by the processor, the method embodiment shown in FIG. 3 is implemented.

According to an eighth aspect, an embodiment of the present invention provides a computer-readable storage medium. The computer-readable storage medium stores an instruction, and when the instruction is run by a processor, the method embodiment shown in FIG. 3 is implemented.

According to a ninth aspect, an embodiment of the present invention provides a computer program product. When the computer program product is run on a computer, the method embodiment shown in FIG. 3 is implemented.

In conclusion, the network device determines the first resource set and configures the first resource set for the terminal device for use. Because at a same transmission moment, the resources in the first resource set are used only by the terminal device or the terminal device group, when the terminal device configured with the first resource set performs communication by using the resource in the first resource set, downlink and uplink interference are reduced, and a switching frequency is reduced.

A person of ordinary skill in the art may understand that all or some of the processes of the methods in the embodiments may be implemented by a computer program instructing relevant hardware. The program may be stored in a computer-readable storage medium. When the program runs, the processes of the method embodiments are included. The foregoing storage medium includes any medium that can store program code, such as a ROM, a RAM, a magnetic disk, or an optical disc.

## Claims

1. A communication method, comprising:
receiving (S302), by a network device from a terminal device, a report message;
determining (S303), by the network device, a first resource set for the terminal device, based on the report message, wherein resources in the first resource set comprise some resources in one cell or resources in a plurality of cells, the resources comprised in the first resource set are periodic, at a same transmission moment, the first resource set serves only one terminal device or one terminal device group, the terminal device group comprises a plurality of terminal devices comprising the terminal device, and at different transmission moments, resources used for co-directional uplink transmission or resources used for co-directional downlink transmission in the first resource set occupy a same frequency domain position on a same carrier;
sending (S304), by the network device, resource configuration information to the terminal device by using higher layer signaling, wherein the resource configuration information indicates the first resource set; wherein before the sending, by the network device, resource configuration information to the terminal device by using higher layer signaling, the method further comprises:
determining, by the network device, based on the report message, that a height of the terminal device meets a preset condition or determining that the terminal device is in a preset flight status; and
communicating (S306), by the network device, with the terminal device using a first resource in the first resource set.

2. The method according to claim 1, wherein when the first resource set serves only one terminal device group, the method further comprises:
sending, by the network device, scheduling information to a first terminal device in the terminal device group by using physical layer signaling, wherein the scheduling information indicates a first resource in the first resource set, and the first resource is used by the first terminal device to perform communication.

3. A communication method, comprising:
transmitting (S301), by a terminal device, to a network device a report message, the report message indicating that a height of the terminal device meets a preset condition or that the terminal device is in a preset flight status;
receiving (S305), by the terminal device, resource configuration information, based on the report message, from the network device by using higher layer signaling, wherein the resource configuration information indicates a first resource set, resources in the first resource set comprise some resources in one cell or resources in a plurality of cells, the resources comprised in the first resource set are periodic, at a same transmission moment, the first resource set serves only the terminal device or one terminal device group, the terminal device group comprises a plurality of terminal devices comprising the terminal device, and at different transmission moments, resources used for co-directional uplink transmission or resources used for co-directional downlink transmission in the first resource set occupy a same frequency domain position on a same carrier; and
determining, by the terminal device, the first resource set based on the resource configuration information; and
communicating (S306), by the terminal device, with the network device using a first resource in the first resource set.

4. The method according to claim 3, further comprising:
receiving, by the terminal device, scheduling information from the network device by using physical layer signaling, wherein the scheduling information indicates the first resource in the first resource set.

5. The method according to any one of claims 1 to 4, wherein heights of the plurality of terminal devices in the terminal device group all meet the preset condition or the plurality of terminal devices are all in the preset flight status.

6. The method according to any one of claims 1 to 5, wherein the first resource set forms a virtual cell, the resource configuration information comprises identification information of the virtual cell, and the identification information of the virtual cell comprises at least one of a cell identifier of the virtual cell, a beam identifier in the virtual cell, information used to identify the terminal device, and an identifier of a sounding reference symbol, SRS.

7. The method according to any one of claims 1 to 6, wherein the resource configuration information comprises a cell identifier list of at least one physical cell to which the resources in the first resource set belong.

8. The method according to any one of claims 1 to 7, wherein
the resource configuration information indicates, by indicating at least two of a start position, a length, a period, an offset, and an end position that are of a time domain, a time domain position comprised in the first resource set; or
the resource configuration information indicates, by using a transmission time unit pattern, a time domain position comprised in the first resource set.

9. The method according to any one of claims 1 to 8, wherein
the first resource set comprises a time-frequency resource used for uplink transmission; and
the uplink transmission comprises transmission of a data channel, and comprises transmission of at least one of a reference signal, a random access channel, and a control channel.

10. The method according to any one of claims 1 to 9, wherein
the first resource set comprises a time-frequency resource used for downlink transmission; and
the downlink transmission comprises transmission of the data channel, and comprises transmission of at least one of a synchronization signal, a reference signal used for measurement or demodulation, and the control channel.

11. The method according to any one of claims 1 to 10, wherein the first resource set is preconfigured, or is determined by the network device through negotiation with another network device.

12. A device (110; 120), comprising a processing unit (1101; 1201) and a communications unit (1103; 1203), wherein
the processing unit is configured to determine, based on a report message received from a terminal device, a first resource set, wherein resources in the first resource set comprise some resources in one cell or resources in a plurality of cells, the resources comprised in the first resource set are periodic, at a same transmission moment, the first resource set serves only one terminal device or one terminal device group, the terminal device group comprises a plurality of terminal devices, and at different transmission moments, resources used for co-directional uplink transmission or resources used for co-directional downlink transmission in the first resource set occupy a same frequency domain position on a same carrier; and
the communications unit is configured to send resource configuration information to the terminal device by using higher layer signaling, wherein the resource configuration information indicates the first resource set;
wherein before the communications unit sends the resource configuration information to the terminal device by using the higher layer signaling,
the processing unit is further configured to determine, based on the report message, that a height of the terminal device meets a preset condition or determine that the terminal device is in a preset flight status, wherein the communication unit is further configured to communicate, with the terminal device using a first resource in the first resource set.

13. The device according to claim 12, wherein
the communications unit is further configured to send scheduling information to a first terminal device in the terminal device group by using physical layer signaling, wherein the scheduling information indicates a first resource in the first resource set, and the first resource is used by the first terminal device to perform communication.

## Patentansprüche

1. Kommunikationsverfahren, umfassend:
Empfangen (S302) einer Meldungsnachricht durch eine Netzwerkvorrichtung von einer Endgerätevorrichtung;
Bestimmen (S303) eines ersten Ressourcensatzes für die Endgerätevorrichtung durch die Netzwerkvorrichtung basierend auf der Meldungsnachricht, wobei Ressourcen in dem ersten Ressourcensatz einige Ressourcen in einer Zelle oder Ressourcen in einer Mehrzahl von Zellen umfassen, die Ressourcen, die in dem ersten Ressourcensatz umfasst sind, periodisch sind, zu einem gleichen Übertragungszeitpunkt der erste Ressourcensatz nur eine Endgerätevorrichtung oder eine Endgerätevorrichtungsgruppe bedient, die Endgerätevorrichtungsgruppe eine Mehrzahl von Endgerätevorrichtungen umfasst, die die Endgerätevorrichtung umfassen, und zu verschiedenen Übertragungszeitpunkten Ressourcen, die für kodirektionale Uplink-Übertragung verwendet werden, oder Ressourcen, die für kodirektionale Downlink-Übertragung verwendet werden, in dem ersten Ressourcensatz eine gleiche Frequenzdomänenposition auf einem gleichen Träger belegen;
Senden (S304) von Ressourcenkonfigurationsinformationen durch die Netzwerkvorrichtung an die Endgerätevorrichtung durch Verwenden von Signalisierung einer höheren Schicht, wobei die Ressourcenkonfigurationsinformationen den ersten Ressourcensatz angeben;
wobei das Verfahren vor dem Senden von Ressourcenkonfigurationsinformationen durch die Netzwerkvorrichtung an die Endgerätevorrichtung unter Verwendung von Signalisierung einer höheren Schicht ferner Folgendes umfasst:
Bestimmen durch die Netzwerkvorrichtung basierend auf der Meldungsnachricht, dass eine Höhe der Endgerätevorrichtung eine voreingestellte Bedingung erfüllt, oder Bestimmen, dass sich die Endgerätevorrichtung in einem voreingestellten Flugstatus befindet; und
Kommunizieren (S306) durch die Netzwerkvorrichtung mit der Endgerätevorrichtung unter Verwendung einer ersten Ressource in dem ersten Ressourcensatz.

2. Verfahren nach Anspruch 1, wobei das Verfahren, wenn der erste Ressourcensatz nur eine Endgerätevorrichtungsgruppe bedient, ferner Folgendes umfasst:
Senden von Dispositionsinformationen durch die Netzwerkvorrichtung an die erste Endgerätevorrichtung in der Endgerätevorrichtungsgruppe durch Verwenden von Signalisierung der Bitübertragungsschicht, wobei die Dispositionsinformationen eine erste Ressource in dem ersten Ressourcensatz angeben und die erste Ressource von der ersten Endgerätevorrichtung zum Durchführen von Kommunikation verwendet wird.

3. Kommunikationsverfahren, umfassend:
Übertragen (S301) einer Meldungsnachricht durch eine Endgerätevorrichtung an eine Netzwerkvorrichtung, wobei die Meldungsnachricht angibt, dass eine Höhe der Endgerätevorrichtung eine voreingestellte Bedingung erfüllt oder dass sich die Endgerätevorrichtung in einem voreingestellten Flugstatus befindet;
Empfangen (S305) von Ressourcenkonfigurationsinformationen durch die Endgerätevorrichtung basierend auf der Meldungsnachricht von der Netzwerkvorrichtung durch Verwenden von Signalisierung einer höheren Schicht, wobei die Ressourcenkonfigurationsinformationen einen ersten Ressourcensatz angeben, Ressourcen in dem ersten Ressourcensatz einige Ressourcen in einer Zelle oder Ressourcen in einer Mehrzahl von Zellen umfassen, die Ressourcen, die in dem ersten Ressourcensatz umfasst sind, periodisch sind, zu einem gleichen Übertragungszeitpunkt der erste Ressourcensatz nur die Endgerätevorrichtung oder eine Endgerätevorrichtungsgruppe bedient, die Endgerätevorrichtungsgruppe eine Mehrzahl von Endgerätevorrichtungen umfasst, die die Endgerätevorrichtung umfassen, und zu verschiedenen Übertragungszeitpunkten Ressourcen, die für kodirektionale Uplink-Übertragung verwendet werden, oder Ressourcen, die für kodirektionale Downlink-Übertragung verwendet werden, in dem ersten Ressourcensatz eine gleiche Frequenzdomänenposition auf einem gleichen Träger belegen; und
Bestimmen des ersten Ressourcensatzes durch die Endgerätevorrichtung basierend auf den Ressourcenkonfigurationsinformationen; und
Kommunizieren (S306) durch die Endgerätevorrichtung mit der Netzwerkvorrichtung unter Verwendung einer ersten Ressource in dem ersten Ressourcensatz.

4. Verfahren nach Anspruch 3, ferner umfassend:
Empfangen von Dispositionsinformationen durch die Endgerätevorrichtung von der Netzwerkvorrichtung durch Verwenden von Signalisierung der Bitübertragungsschicht, wobei die Dispositionsinformationen die erste Ressource in dem ersten Ressourcensatz angeben.

5. Verfahren nach einem der Ansprüche 1 bis 4, wobei Höhen der Mehrzahl von Endgerätevorrichtungen in der Endgerätevorrichtungsgruppe alle die voreingestellte Bedingung erfüllen oder sich die Mehrzahl von Endgerätevorrichtungen gesamt in dem voreingestellten Flugstatus befindet.

6. Verfahren nach einem der Ansprüche 1 bis 5, wobei der erste Ressourcensatz eine virtuelle Zelle bildet, die Ressourcenkonfigurationsinformationen Identifikationsinformationen der virtuellen Zelle umfassen und die Identifikationsinformationen der virtuellen Zelle mindestens eines von einer Zellkennung der virtuellen Zelle, einer Strahlkennung in der virtuellen Zelle, Informationen, die zum Identifizieren der Endgerätevorrichtung verwendet werden, und einer Kennung eines Sondierungsreferenzsymbols, SRS, umfassen.

7. Verfahren nach einem der Ansprüche 1 bis 6, wobei die Ressourcenkonfigurationsinformationen eine Zellkennungsliste mindestens einer physischen Zelle umfassen, zu der die Ressourcen in dem ersten Ressourcensatz gehören.

8. Verfahren nach einem der Ansprüche 1 bis 7, wobei
die Ressourcenkonfigurationsinformationen eine in dem ersten Ressourcensatz umfasste Zeitdomänenposition angeben, indem sie mindestens zwei von einer Startposition, einer Länge, einer Periode, einem Offset und einer Endposition angeben, die von einer Zeitdomäne sind; oder
die Ressourcenkonfigurationsinformationen eine in dem ersten Ressourcensatz umfasste Zeitdomänenposition durch Verwenden eines Übertragungszeiteinheitsmusters angeben.

9. Verfahren nach einem der Ansprüche 1 bis 8, wobei
der erste Ressourcensatz eine Zeit-Frequenz-Ressource umfasst, die für Uplink-Übertragung verwendet wird; und
die Uplink-Übertragung Übertragung eines Datenkanals umfasst und Übertragung mindestens eines von einem Referenzsignal, einem Direktzugriffskanal und einem Steuerkanal umfasst.

10. Verfahren nach einem der Ansprüche 1 bis 9, wobei
der erste Ressourcensatz eine Zeit-Frequenz-Ressource umfasst, die für Downlink-Übertragung verwendet wird; und
die Downlink-Übertragung Übertragung des Datenkanals umfasst und Übertragung mindestens eines von einem Synchronisationssignal, einem Referenzsignal, das zur Messung oder Demodulation verwendet wird, und dem Steuerkanal umfasst.

11. Verfahren nach einem der Ansprüche 1 bis 10, wobei der erste Ressourcensatz vorkonfiguriert ist oder von der Netzwerkvorrichtung durch Verhandeln mit einer anderen Netzwerkvorrichtung bestimmt wird.

12. Vorrichtung (110; 120), umfassend eine Verarbeitungseinheit (1101; 1201) und eine Kommunikationseinheit (1103; 1203), wobei
die Verarbeitungseinheit dazu konfiguriert ist, basierend auf einer Meldungsnachricht, die von einer Endgerätevorrichtung empfangen wird, einen ersten Ressourcensatz zu bestimmen, wobei Ressourcen in dem ersten Ressourcensatz einige Ressourcen in einer Zelle oder Ressourcen in einer Mehrzahl von Zellen umfassen, die Ressourcen, die in dem ersten Ressourcensatz umfasst sind, periodisch sind, zu einem gleichen Übertragungszeitpunkt der erste Ressourcensatz nur eine Endgerätevorrichtung oder eine Endgerätevorrichtungsgruppe bedient, die Endgerätevorrichtungsgruppe eine Mehrzahl von Endgerätevorrichtungen umfasst, und zu verschiedenen Übertragungszeitpunkten Ressourcen, die für kodirektionale Uplink-Übertragung verwendet werden, oder Ressourcen, die für kodirektionale Downlink-Übertragung verwendet werden, in dem ersten Ressourcensatz eine gleiche Frequenzdomänenposition auf einem gleichen Träger belegen; und
die Kommunikationseinheit dazu konfiguriert ist, Ressourcenkonfigurationsinformationen durch Verwenden von Signalisierung einer höheren Schicht an die Endgerätevorrichtung zu senden, wobei die Ressourcenkonfigurationsinformationen den ersten Ressourcensatz angeben;
wobei, bevor die Kommunikationseinheit die Ressourcenkonfigurationsinformationen durch Verwenden der Signalisierung einer höheren Schicht an die Endgerätevorrichtung sendet,
die Verarbeitungseinheit ferner dazu konfiguriert ist, basierend auf der Meldungsnachricht zu bestimmen, dass eine Höhe der Endgerätevorrichtung eine voreingestellte Bedingung erfüllt, oder zu bestimmen, dass sich die Endgerätevorrichtung in einem voreingestellten Flugstatus befindet, wobei die Kommunikationseinheit ferner dazu konfiguriert ist, mit der Endgerätevorrichtung unter Verwendung einer ersten Ressource in dem ersten Ressourcensatz zu kommunizieren.

13. Vorrichtung nach Anspruch 12, wobei
die Kommunikationseinheit ferner dazu konfiguriert ist, durch Verwenden von Signalisierung der Bitübertragungsschicht Dispositionsinformationen an eine erste Endgerätevorrichtung in der Endgerätevorrichtungsgruppe zu senden, wobei die Dispositionsinformationen eine erste Ressource in dem ersten Ressourcensatz angeben und die erste Ressource von der ersten Endgerätevorrichtung zum Durchführen von Kommunikation verwendet wird.

## Revendications

1. Procédé de communication, comprenant :
la réception (S302), par un dispositif de réseau en provenance d'un dispositif terminal, d'un message de rapport ;
la détermination (S303), par le dispositif de réseau, d'un premier ensemble de ressources pour le dispositif terminal, sur la base du message de rapport, des ressources dans le premier ensemble de ressources comprenant certaines ressources dans une cellule ou des ressources dans une pluralité de cellules, les ressources comprises dans le premier ensemble de ressources étant périodiques, à un même instant de transmission, le premier ensemble de ressources ne desservant qu'un seul dispositif terminal ou un seul groupe de dispositifs terminaux, le groupe de dispositifs terminaux comprenant une pluralité de dispositifs terminaux comprenant le dispositif terminal, et à différents instants de transmission, des ressources utilisées pour une transmission de liaison montante co-directionnelle ou des ressources utilisées pour une transmission de liaison descendante co-directionnelle dans le premier ensemble de ressources occupant une même position dans le domaine fréquentiel sur une même porteuse ;
l'envoi (S304), par le dispositif de réseau, d'informations de configuration de ressources au dispositif terminal en utilisant une signalisation de couche supérieure, les informations de configuration de ressources indiquant le premier ensemble de ressources ; avant l'envoi, par le dispositif de réseau, d'informations de configuration de ressources au dispositif terminal en utilisant une signalisation de couche supérieure, le procédé comprenant en outre :
la détermination, par le dispositif de réseau, sur la base du message de rapport, qu'une hauteur du dispositif terminal remplit une condition prédéfinie ou la détermination que le dispositif terminal est dans un état de vol prédéfini ; et
la communication (S306), par le dispositif de réseau, avec le dispositif terminal en utilisant une première ressource dans le premier ensemble de ressources.

2. Procédé selon la revendication 1, lorsque le premier ensemble de ressources dessert un seul groupe de dispositifs terminaux, le procédé comprenant en outre :
l'envoi, par le dispositif de réseau, d'informations de planification à un premier dispositif terminal dans le groupe de dispositifs terminaux en utilisant une signalisation de couche physique, les informations de planification indiquant une première ressource dans le premier ensemble de ressources, et la première ressource étant utilisée par le premier dispositif terminal pour effectuer une communication.

3. Procédé de communication, comprenant :
la transmission (S301), par un dispositif terminal, à un dispositif de réseau, d'un message de rapport, le message de rapport indiquant qu'une hauteur du dispositif terminal remplit une condition prédéfinie ou que le dispositif terminal est dans un état de vol prédéfini ;
la réception (S305), par le dispositif terminal, d'informations de configuration de ressources, sur la base du message de rapport, en provenance du dispositif de réseau en utilisant une signalisation de couche supérieure, les informations de configuration de ressources indiquant un premier ensemble de ressources, des ressources dans le premier ensemble de ressources comprenant certaines ressources dans une cellule ou des ressources dans une pluralité de cellules, les ressources comprises dans le premier ensemble de ressources étant périodiques, à un même instant de transmission, le premier ensemble de ressources ne desservant que le dispositif terminal ou un seul groupe de dispositifs terminaux, le groupe de dispositifs terminaux comprenant une pluralité de dispositifs terminaux comprenant le dispositif terminal, et à différents instants de transmission, des ressources utilisées pour une transmission de liaison montante co-directionnelle ou des ressources utilisées pour une transmission de liaison descendante co-directionnelle dans le premier ensemble de ressources occupant une même position dans le domaine fréquentiel sur une même porteuse ; et
la détermination, par le dispositif terminal, du premier ensemble de ressources sur la base des informations de configuration de ressources ; et
la communication (S306), par le dispositif terminal, avec le dispositif de réseau en utilisant une première ressource dans le premier ensemble de ressources.

4. Procédé selon la revendication 3, comprenant en outre :
la réception, par le dispositif terminal, d'informations de planification en provenance du dispositif de réseau en utilisant une signalisation de couche physique, les informations de planification indiquant la première ressource dans le premier ensemble de ressources.

5. Procédé selon l'une quelconque des revendications 1 à 4, des hauteurs de la pluralité de dispositifs terminaux dans le groupe de dispositifs terminaux remplissant toutes la condition prédéfinie, ou la pluralité de dispositifs terminaux étant tous dans l'état de vol prédéfini.

6. Procédé selon l'une quelconque des revendications 1 à 5, le premier ensemble de ressources formant une cellule virtuelle, les informations de configuration de ressources comprenant des informations d'identification de la cellule virtuelle, et les informations d'identification de la cellule virtuelle comprenant au moins l'un parmi un identifiant de cellule de la cellule virtuelle, un identifiant de faisceau dans la cellule virtuelle, des informations utilisées pour identifier le dispositif terminal, et un identifiant de symbole de référence de sondage, SRS.

7. Procédé selon l'une quelconque des revendications 1 à 6, les informations de configuration de ressources comprenant une liste d'identifiants de cellules d'au moins une cellule physique à laquelle appartiennent les ressources dans le premier ensemble de ressources.

8. Procédé selon l'une quelconque des revendications 1 à 7,
les informations de configuration de ressources indiquant, en indiquant au moins deux éléments parmi une position de début, une longueur, une période, un décalage et une position de fin qui sont d'un domaine temporel, une position de domaine temporel comprise dans le premier ensemble de ressources ; ou
les informations de configuration de ressources indiquant, en utilisant un motif d'unité de temps de transmission, une position de domaine temporel comprise dans le premier ensemble de ressources.

9. Procédé selon l'une quelconque des revendications 1 à 8,
le premier ensemble de ressources comprenant une ressource temps-fréquence utilisée pour la transmission en liaison montante ; et
la transmission en liaison montante comprenant la transmission d'un canal de données, et comprenant la transmission d'au moins l'un parmi un signal de référence, un canal d'accès aléatoire et un canal de commande.

10. Procédé selon l'une quelconque des revendications 1 à 9,
le premier ensemble de ressources comprenant une ressource temps-fréquence utilisée pour la transmission en liaison descendante ; et
la transmission en liaison descendante comprenant la transmission du canal de données, et comprenant la transmission d'au moins l'un parmi un signal de synchronisation, un signal de référence utilisé pour la mesure ou la démodulation, et le canal de commande.

11. Procédé selon l'une quelconque des revendications 1 à 10, le premier ensemble de ressources étant préconfiguré, ou étant déterminé par le dispositif de réseau par négociation avec un autre dispositif de réseau.

12. Dispositif (110 ; 120), comprenant une unité de traitement (1101 ; 1201) et une unité de communication (1103 ; 1203),
l'unité de traitement étant configurée pour déterminer, sur la base d'un message de rapport reçu en provenance d'un dispositif terminal, un premier ensemble de ressources, des ressources dans le premier ensemble de ressources comprenant certaines ressources dans une cellule ou des ressources dans une pluralité de cellules, les ressources comprises dans le premier ensemble de ressources étant périodiques, à un même instant de transmission, le premier ensemble de ressources ne desservant qu'un seul dispositif terminal ou un seul groupe de dispositifs terminaux, le groupe de dispositifs terminaux comprenant une pluralité de dispositifs terminaux, et à différents instants de transmission, des ressources utilisées pour une transmission de liaison montante co-directionnelle ou des ressources utilisées pour une transmission de liaison descendante co-directionnelle dans le premier ensemble de ressources occupant une même position dans le domaine fréquentiel sur une même porteuse ; et
l'unité de communication étant configurée pour envoyer des informations de configuration de ressources au dispositif terminal en utilisant une signalisation de couche supérieure, les informations de configuration de ressources indiquant le premier ensemble de ressources ;
avant que l'unité de communication n'envoie les informations de configuration de ressources au dispositif terminal en utilisant la signalisation de couche supérieure,
l'unité de traitement étant en outre configurée pour déterminer, sur la base du message de rapport, qu'une hauteur du dispositif terminal remplit une condition prédéfinie ou déterminer que le dispositif terminal est dans un état de vol prédéfini, l'unité de communication étant en outre configurée pour communiquer avec le dispositif terminal en utilisant une première ressource dans le premier ensemble de ressources.

13. Dispositif selon la revendication 12,
l'unité de communication étant en outre configurée pour envoyer des informations de planification à un premier dispositif terminal dans le groupe de dispositifs terminaux en utilisant une signalisation de couche physique, les informations de planification indiquant une première ressource dans le premier ensemble de ressources, et la première ressource étant utilisée par le premier dispositif terminal pour effectuer une communication.
